# EUROPÄISCHE PATENTSCHRIFT

(11) **EP 3 119 668 B1**
(45) Veröffentlichungstag und Bekanntmachung des Hinweises auf die Patenterteilung: **12.12.2018**
(21) Anmeldenummer: 15722352.0
(22) Anmeldetag: 20.03.2015
(51) Int. Cl.: B62K 23/08, B62M 25/06

(54) **SCHALTHEBEL UND SCHALTPEDAL**
GEARSHIFT LEVER AND GEARSHIFT PEDAL
LEVIER DE VITESSE ET SÉLECTEUR DE VITESSE PAR PÉDALE

(30) Priorität: 20.03.2014 DE 202014002449 U; 08.12.2014 DE 202014009640 U
(43) Veröffentlichungstag der Anmeldung: 25.01.2017
(73) Patentinhaber: Klein, Fritz, 47443 Moers (DE)
(72) Erfinder: HÖLTERHOFF, Norbert, 47053 Duisburg (DE); KLEIN, Fritz, 47443 Moers (DE); KERSTEN, Wolfgang-Heinz, 45470 Mülheim a. d. Ruhr (DE)
(74) Vertreter: Demski, Siegfried
(86) Internationale Anmeldenummer: PCT/DE2015/000129
(87) Internationale Veröffentlichungsnummer: WO 2015/139681

(56) Entgegenhaltungen:
- CN-A- 103 507 897
- DE-A1-102009 015 710
- JP-U- S5 338 748
- JP-U- S6 061 994
- US-A- 5 687 617
- US-A1- 2011 247 444

## Beschreibung

Die Erfindung betrifft einen Schalthebel für ein einspuriges oder mehrspuriges Kraftfahrzeug, umfassend einen Hebelarm und zumindest ein Schaltpedal, welches drehbar um dessen Axialrichtung gelagert ist.

Gattungsgemäße Schalthebel dienen der Umstellung des Übersetzungsverhältnisses des Getriebes von einspurigen Kraftfahrzeugen, wie Motorrädern oder Motorrollern, oder von mehrspurigen Kraftfahrzeugen, wie sogenannten Trikes oder Quads, wobei der Kraftfahrzeugführer den Schalthebel mit einem Fuß betätigt. Dabei sind die Schalthebel so gestaltet, dass ein Schaltvorgang schnell und ohne großen Kraftaufwand erfolgen kann, sodass das Kraftfahrzeug hinsichtlich des in einer Fahrsituation passenden Übersetzungsverhältnisses und einer gegebenenfalls nötigen Änderung desselben optimal geführt werden kann. Ferner sind die Schalthebel derart ausgebildet, dass der Bewegungsradius zu ihrer Betätigung so gering wie möglich ist. Dabei muss jedoch sichergestellt sein, dass der Schalthebel nicht ausversehen betätigt wird. Durch diese Maßnahmen wird verhindert, dass die Muskeln des Fahrzeugführers bei längeren Fahrten und also zahlreichen Schaltvorgängen ermüden, wodurch der Bedienkomfort des Kraftfahrzeuges nachteilig geschmälert würde.

In der Regel ist ein solcher Schalthebel derart an dem Kraftfahrzeug angeordnet, dass er mit den Zehen eines Fußes betätigt wird, indem er nach oben gedrückt wird, um das Übersetzungsverhältnis zu vergrößern (Hochschalten), oder nach unten gedrückt wird, um das Übersetzungsverhältnis zu verkleinern (Herunterschalten). Dazu umfasst der Schalthebel einen Hebelarm und ein Schaltpedal, welches an dem Hebelarm befestigt ist und sich rechtwinklig von diesem erstreckt. Es ist aber auch bekannt, zum Beispiel aus der DE 10 2009 015 710 A1, eine Schaltvorrichtung mit zwei Hebelarmen, von denen jeder ein Schaltpedal aufweist, auszugestalten. Dabei ist an dem Drehpunkt des einen Hebelarmes ein weiterer Hebelarm befestigt, wobei sich ein Hebelarm nach vorne erstreckt und der andere Hebelarm nach hinten. Bei dieser Schaltvorrichtung kann ein Schaltvorgang auch durch Betätigung des sich nach hinten erstreckenden Hebelarmes mit dem daran befestigten Schaltpedal durch die Ferse eines Fußes des Kraftfahrzeugführers ausgelöst werden. Gemäß der genannten Druckschrift ist das Schaltpedal des sich nach hinten erstreckenden Hebelarmes schwenkbar mit diesem verbunden, sodass der Kraftfahrzeugführer die Wahl hat, ob er mit den Zehen oder der Ferse eines Fußes einen Schaltvorgang auslösen möchte, indem er das Schaltpedal des sich nach hinten erstreckenden Hebelarmes wahlweise in die gewünschte Position verschwenkt.

Bei Schalthebeln, deren Schaltpedal zur Bedienung mit den Zehen eines Fußes vorgesehen ist, besteht das Problem, dass das Schaltpedal beim Hochdrücken auf dem Schuh des Kraftfahrzeugführers entlang gleitet, wodurch einerseits ein Reibungswiderstand zu überwinden ist und andererseits eine unerwünschte Abnutzung der Oberseite des Schuhs des Kraftfahrzeugführers erfolgt. Ferner verbleibt auch ein Abrieb der Gummiummantelung, welche Schaltpedale häufig aufweisen, auf der Oberseite des Schuhs. Die Überwindung des Reibungswiderstandes beansprucht die Muskulatur des Kraftfahrzeugführers, wodurch dieser Effekt zur Erlahmung der Muskulatur beiträgt und so den Bedienkomfort des Kraftfahrzeuges schmälert. Die Abnutzung des Schuhs und der Abrieb auf dem Schuh schmälern nachteilig dessen optisches Erscheinungsbild. Zur Lösung dieses Problems schlägt die US 5,687,617 A ein Polster vor, welches mittels zweier Schlaufen mit dem Schaltpedal verbunden werden kann, sodass zwischen dem Schuh des Kraftfahrzeugführers und dem Schaltpedal stets das Polster angeordnet ist.

Dieses Polster verhindert, dass eine Gummiummantelung des Schaltpedals auf dem Schuh Abriebspuren und Eindrücke hinterlässt. Darüber hinaus vermindert das Polster die Erlahmung der Muskeln des Kraftfahrzeugführers und damit einhergehenden Muskelkater. Das Polster weist eine starre Grundplatte und eine Polsterung aus geschäumtem Gummi oder biegsamen Neopren auf. An der Grundplatte sind zwei Schlaufen festgelegt, mit deren Hilfe das Polster an einem Schaltpedal angeordnet werden kann. Nachteilig an diesem Polster ist zunächst, dass es separat erworben werden muss. Ein weiterer Nachteil besteht darin, dass das Polster zwischen dem Schaltpedal und dem Schuh des Kraftfahrzeugführers angeordnet ist, wodurch der Bewegungsradius zur Auslösung eines Schaltvorganges verkleinert ist, was eine unbeabsichtigte Betätigung des Schalthebels zur Folge haben kann, und dadurch bewirkt, dass ein Kraftfahrzeugführer vor dem Schaltvorgang keine entspannte Fußhaltung einnimmt, um ein frühes Hochschalten zu verhindern. Ferner weist das Polster den Nachteil auf, dass die Betätigung eines mit diesem Polster ausgestatteten Schalthebels für die meisten Führer von entsprechenden Kraftfahrzeugen ungewohnt ist und dieses daher ablehnen.

Aus der US-Anmeldung 2011/247444 A1 ist ein Betätigungshebel für ein Schaltgestänge bekannt, welches um einen Drehpunkt verschwenkbar ist, wobei einenends eine Fußauflage und anderenends ein Hebelarm zum Getriebe angelenkt ist.
Aus der JP 53 38 748 U ist ein eckiges Schaltpedal bekannt, welches in geringem Umfang eine Schwenkbeweglichkeit ermöglicht. Die Schwenkbeweglichkeit wird durch einen Stift und einer Anschlagfläche begrenzt. Aus der JP 60 61 994 ist ein Schaltpedal bekannt, welcher keine Eigenrotation ausführen kann, aber an dem Schalthebel in zwei mögliche Positionen überführt werden kann.

Aus der CN 103 507 897 A ist ein gattungsgemässer Schalthebel bzw. ein Schaltpedal nach den beiden unabhängigen Ansprüchen 1 und 5 bekannt, wobei das Schaltpedale in beide Richtungen drehbar gelagert ist.

Demgegenüber liegt der Erfindung die Aufgabe zugrunde, einen Schalthebel und ein Schaltpedal zu schaffen, deren Betätigung nicht zu einer Beeinträchtigung der Unversehrtheit des Schuhs, mit welchem der Schaltvorgang ausgelöst wird, führt, bei denen die mit dem Schaltvorgang einhergehende Erlahmung der Muskeln minimiert wird und deren Form dem entspricht, woran die Kraftfahrzeugführer gewöhnt sind.
Zur Lösung der Aufgabe ist vorgesehen, dass das Schaltpedal um dessen Axialrichtung nur in einer ersten Drehrichtung an dem Hebelarm befestigt ist, sodass das Schaltpedal auf der Oberseite eines Schuhs abrollbar ist. Weitere vorteilhafte Ausgestaltungen der Erfindung ergeben sich aus den Unteransprüchen.
Der wesentliche Vorteil eines solchen Schalthebels besteht darin, dass ein mit den Zehen durch Hoch- und Herunterdrücken zu betätigendes Schaltpedal, welches oberhalb des Schuhs eines Kraftfahrzeugführers an dem Hebelarm angeordnet ist, bei einer aufwärtsgerichteten Neigung des Schuhs nicht auf der Oberseite des Schuhs entlang gleitet, sondern auf dieser abrollt. Dadurch wird erreicht, dass auf der Oberseite des Schuhs kein Abrieb erfolgt und sich diese nicht abnutzt. Ferner wird erreicht, dass kein Gleit-Reibungswiderstand bei der Betätigung des Schaltpedals überwunden werden muss, sodass die bei der Betätigung beanspruchten Muskeln langsamer ermüden.

Der wesentliche Aspekt der Erfindung besteht in der Drehbarkeit des Schaltpedals, wobei dies dadurch erreicht werden kann, dass das Schaltpedal drehbar an dem Hebelarm befestigt ist, oder dass das Schaltpedal so aufgebaut ist, dass ein nach außen weisender Teil desselben drehbar ist. Die Befestigung des Schaltpedals an dem Hebelarm erfolgt derart, dass das Schaltpedal nur in einer ersten Drehrichtung drehbar an dem Hebelarm befestigt ist.

Dadurch, dass das Schaltpedal nur in einer Drehrichtung drehbar ist, wird verhindert, dass das Schaltpedal beim Herunterdrücken mit der Sohle eines Schuhs auf dieser abrollt, was nachteilig zu einem Abrutschen des Schuhs bei dem Schaltvorgang führen könnte. Der wesentliche Aspekt dieser Ausgestaltung der Erfindung besteht nicht nur in der Drehbarkeit des Schaltpedals sondern auch darin, dass das Schaltpedal um dessen Axialrichtung nur in einer Drehrichtung drehbar ist und in einer dazu entgegengesetzten Drehrichtung nicht drehbar ist. Dies kann wiederum grundsätzlich auf zweierlei Weise erreicht werden: Entweder ist das Schaltpedal drehbar an dem Hebelarm eines Schalthebels befestigt, wobei die Einschränkung hinsichtlich der möglichen Drehrichtung durch eine an dem Hebelarm angeordnete Mechanik erreicht wird, oder das Schaltpedal ist drehfest an dem Hebelarm befestigt, wobei eine in das Schaltpedal integrierte Mechanik sowohl die Drehbarkeit eines nach außen weisenden Teils des Schaltpedals als auch die Einschränkung der Drehbarkeit hinsichtlich der möglichen Drehrichtung bewirkt. Letzteres kann über einen Hülsenfreilauf (Nadelfreilauf) oder eine Klemmhülse (Klemmkörperfreilauf, Klemmrollenfreilauf) erreicht werden. Die Drehbarkeit in einer Richtung wird dadurch unterstützt, dass der Hebelarm ein Nadellager, Tonnenlager oder Kugellager aufweist, in welchem ein Abschnitt des Schaltpedals gelagert ist, oder dass der Hebelarm eine Lagerbuchse aufweist, in welcher ein Abschnitt des Schaltpedals gelagert ist.

In einer Ausgestaltung des erfindungsgemäßen Schalthebels ist dieser auf der linken Seite eines ein- oder mehrspurigen Kraftfahrzeuges montierbar, wobei das Schaltpedal in derart drehbar an dem Hebelarm befestigt ist, dass das Schaltpedal bei einer aufwärts gerichteten Neigung eines linken Schuhs eines Kraftfahrzeugführers auf einer Oberseite des Schuhs abrollt. In dieser Ausgestaltung ist das Schaltpedal mit Blick auf die von dem Kraftfahrzeug abgewandte Stirnfläche des Schaltpedals entgegen dem Uhrzeigersinn drehbar. In einer weiteren Ausgestaltung des erfindungsgemäßen Schalthebels ist dieser auf der rechten Seite eines ein- oder mehrspurigen Kraftfahrzeuges montierbar, wobei das Schaltpedal in derart drehbar an dem Hebelarm befestigt ist, dass das Schaltpedal bei einer aufwärts gerichteten Neigung eines rechten Schuhs eines Kraftfahrzeugführers auf einer Oberseite des Schuhs abrollt. In dieser Ausgestaltung ist das Schaltpedal mit Blick auf die von dem Kraftfahrzeug abgewandte Stirnfläche des Schaltpedals im Uhrzeigersinn drehbar.

Die Erfindung schlägt zur Lösung der Aufgabe ferner ein Schaltpedal vor, welches dadurch gekennzeichnet ist, dass das Schaltpedal einen Träger und eine auf dem Träger gelagerte, zumindest einteilige Hülse aufweist, wobei die Hülse auf dem Träger nur in einer ersten Drehrichtung drehbar gelagert ist und das Schaltpedal auf der Oberseite eines Schuhs abrollbar ist. Mit dem erfindungsgemäßen Schaltpedal können ein- oder mehrspurige Kraftfahrzeuge nachgerüstet werden, ohne dass der gesamte Schalthebel ausgetauscht werden muss, da die aus dem Stand der Technik bekannten Schaltpedale zumeist durch Schraubverbindungen an den Hebelarmen befestigt und damit entfernbar sind. Das erfindungsgemäße Schaltpedal weist im Gegensatz zu dem Schaltpedal des zuvor geschilderten erfindungsgemäßen Schalthebels eine Hülse mit der Eigenschaft auf, um deren Axialrichtung in einer Richtung drehbar zu sein. Diese Funktionalität wird bei dem zuvor geschilderten Schalthebel durch die Lagerung des Schaltpedals an dem Hebelarm erreicht, wobei ein Fachmann eine in das Schaltpedal integrierte Mechanik unschwer auf diese Lagerung übertragen kann. Die Verdrehbarkeit der Hülse auf dem Träger in eine Drehrichtung kann dadurch erreicht werden, dass die Hülse ein Nadellager, Tonnenlager oder

Kugellager aufweist, durch welches die Hülse auf dem Träger gelagert ist, oder dass die Hülse eine Lagerbuchse umfasst, durch welche sich der Träger erstreckt.

Dadurch, dass die Hülse auf dem Träger nur in einer ersten Drehrichtung drehbar gelagert ist und in einer dazu entgegengesetzten zweiten Drehrichtung nicht auf dem Träger drehbar ist ergibt sich der bereits in Zusammenhang mit dem erfindungsgemäßen Schalthebel geschilderte Vorteil, dass beim Herunterdrücken des Schaltpedals beim Herunterschalten ein Abrutschen des Schuhes des Kraftfahrzeugführers verhindert wird.

In weiterer Ausgestaltung des Schaltpedals kann vorgesehen sein, dass der Träger und die Hülse in einer Schale angeordnet sind, wobei die Schale an der Hülse befestigt ist, sodass eine Relativbewegung zwischen der Schale und der Hülse ausgeschlossen ist. In dieser Ausgestaltung sind Träger und Hülse von einer Schale umgeben, welche bei der Betätigung des Schaltpedals mit dem Schuh des Kraftfahrzeugführers in Kontakt gelangt. Durch die feste Verbindung zwischen der Hülse und der Schale rollt die Schale auf der Oberseite des Schuhs bei einer aufwärts gerichteten Neigung desselben auf dessen Oberseite ab. Die Schale verhindert, dass die Hülse und der Träger der Witterung ausgesetzt sind, wodurch eine Korrosion vermieden wird und kann darüber hinaus zu einem ansprechenden optischen Erscheinungsbild des Schaltpedals beitragen, wenn sie beispielsweise aus verchromtem Stahl oder Aluminium besteht. Vorzugsweise weist die Schale die Form eines einseitig oder beidseitig offenen Hohlzylinders auf.

Gemäß einer weiteren Ausgestaltung des erfindungsgemäßen Schaltpedals ist vorgesehen, dass auf einer äußeren Radialfläche der Hülse oder der Schale zumindest ein Kontaktelement angeordnet ist, wobei im Regelfall mehrere Kontaktelemente, welche beispielsweise parallel zueinander angeordnet sind, vorhanden sind. Das Kontaktelement gelangt mit dem Schuh des Fahrzeugführers bei einer Betätigung des Schaltpedals in Kontakt und dient zum einen der Polsterung und zum anderen der Herstellung eines griffigen Kontaktes zwischen dem Schuh und der Hülse beziehungsweise der Schale des Schaltpedals, sodass diese auf jeden Fall auf dem Schuh abrollen, anstatt auf diesem entlangzugleiten. Bevorzugt erstreckt sich das Kontaktelement über den gesamten Umfang der Hülse oder der Schale, was allerdings nicht zwingend der Fall sein muss, da sich diese bei dem Abrollen auf dem Schuh des Kraftfahrzeugführers nicht um 360 Grad drehen. Das Kontaktelement kann beispielsweise aus Gummi, einem Kunststoff oder einem Metall, wie Messing, bestehen. Gummi ist einerseits elastisch nachgiebig und bewirkt andererseits einen griffigen Kontakt mit dem Schuh des Kraftfahrzeugführers. Ein geeigneter Kunststoff, wie zum Beispiel ein geschäumter Kunststoff, ist ebenfalls elastisch nachgiebig und bewirkt einen griffigen Kontakt mit dem Schuh des Kraftfahrzeugführers. Kontaktelemente aus Messing mögen auch das optische Erscheinungsbild des Schaltpedals verbessern. Ferner kann die Oberfläche der Hülse, der Schale oder des zumindest einen Kontaktelementes glatt sein oder eine Oberflächenstruktur aufweisen, welche, wie das Kontaktelement selbst, der Verbesserung des Kontaktes zwischen einem Schuh des Kraftfahrzeugführers und dem Schaltpedal dient und so ein Gleiten des Schaltpedals auf dem Schuh verhindert, da das Schaltpedal auf dem Schuh rollen soll.

In bevorzugter Ausgestaltung ist vorgesehen, dass die Hülse ein Hülsenfreilauf (Nadelfreilauf) oder eine Klemmhülse (Klemmkörperfreilauf, Klemmrollenfreilauf) ist oder einen Hülsenfreilauf oder eine Klemmhülse umfasst, um eine Verdrehbarkeit der Hülse in nur eine Drehrichtung zu erreichen. Ein Hülsenfreilauf weist wenigstens ein innenliegendes Ringelement auf, welches an der Innenfläche der Hülse befestigt ist. Das Ringelement weist umfangsverteilte Vertiefungen oder Durchbrüche auf, die sich in Axialrichtung der Hülse erstrecken und in welchen zylindrische Stifte angeordnet sind. Bei einer Verdrehung der Hülse auf dem Träger in eine erste Drehrichtung werden die Stifte gegen eine erste Wandung der Vertiefungen oder Durchbrüche gedrückt und rotieren dort bei fortschreitender Verdrehung der Hülse. Wird die Hülse dagegen in eine der ersten Drehrichtung entgegengesetzte zweite Drehrichtung verdreht, werden die Stifte an eine der ersten Wandung der Vertiefungen oder Durchbrüche gegenüberliegende zweite Wandung gedrückt, welche so geformt ist, dass eine Rotation der Stifte durch eine entgegenwirkende Reibungskraft zwischen den Stiften und der zweiten Wandung unterbunden wird, sodass die Hülse nicht weiter verdreht werden kann, da die Stifte auf der Außenfläche des Trägers nicht mehr abrollen können. Neben dem fest mit der Innenfläche der Hülse verbundenen Ringelement können weitere Ringelemente vorhanden sein, welche nicht fest mit der Innenfläche der Hülse verbunden sind und darum frei verdrehbar sind. Diese Ringelemente, welche ebenfalls in Vertiefungen oder Durchbrüchen angeordnete Stifte aufweisen können, tragen jedoch zu der geschilderten Funktion der Hülse nichts bei, sondern dienen der Vereinfachung des Aufschiebens der Hülse auf den Träger.

Der Träger weist bevorzugt ein sich in dessen Axialrichtung erstreckendes Befestigungselement auf, welches beispielsweise als Stift mit einem an der Außenfläche befindlichen Gewinde ausgebildet ist. Das Befestigungselement dient der Befestigung des erfindungsgemäßen Schaltpedals an einem Hebelarm eines Schalthebels, wobei die vorteilhaften Wirkungen allein durch die Verdrehung der Hülse gegebenenfalls zusammen mit der Schale erfolgt, wohingegen der Träger drehfest an dem Hebelarm befestigt wird.

Das Schaltpedal wird erfindungsgemäß derart an dem Hebelarm eines Schalthebels befestigt, dass eine aufwärtsgerichtete Neigung eines Fußes eines Kraftfahrzeugführers zur Durchführung eines Schaltvorganges (i.d.R. Hochschaltvorgang) ein Abrollen der Hülse bzw. der Schale auf der Oberseite des an dem Fuß angeordneten Schuhs bewirkt. Durch die Drehbarkeit der Hülse bzw. der Schale in nur eine Drehrichtung, soweit diese Eigenschaft entsprechend einer besonderen Ausgestaltung des erfindungsgemäßen Schalthebels oder Schaltpedals vorhanden ist, ist dabei zugleich ausgeschlossen, dass die Hülse bzw. die Schale bei einer abwärtsgerichteten Neigung oder Bewegung des Fußes des Kraftfahrzeugführers zur Durchführung eines Schaltvorganges (i.d.R. Herunterschaltvorgang) auf der Sohle des Schuhs abrollt, was nachteilig zu einem Abrutschen führen könnte.

Es wird besonders betont, dass die Verdrehbarkeit des Schaltpedals der wesentliche Aspekt der Erfindung ist, und dass in besonderer Ausgestaltung der Erfindung der Aspekt hinzukommt, dass das Schaltpedal nur in eine Drehrichtung verdrehbar ist, sodass zusätzlich ein Abrutschen von dem Schaltpedal verhindert wird. Welche Ausgestaltung der Erfindung schließlich für ein konkretes Fahrzeug gewählt wird, wird nicht zuletzt von den Kosten der gewählten Ausführungsform der Erfindung abhängen.

Die Erfindung wird im Nachfolgenden anhand der Figuren nochmals erläutert.

Es zeigt
- Fig. 1: eine perspektivische Ansicht einer ersten Ausführungsform des erfindungsgemäßen Schaltpedals,
- Fig. 2: eine Explosionsdarstellung der ersten Ausführungsform des erfindungsgemäßen Schaltpedals,
- Fig. 3: eine Schnittansicht der ersten Ausführungsform des erfindungsgemäßen Schaltpedals und
- Fig. 4: eine Seitenansicht eines einspuriges Kraftrades, welches mit einer Ausführungsform des erfindungsgemäßen Schalthebels oder einer Ausführungsform des erfindungsgemäßen Schaltpedals ausgestattet ist.

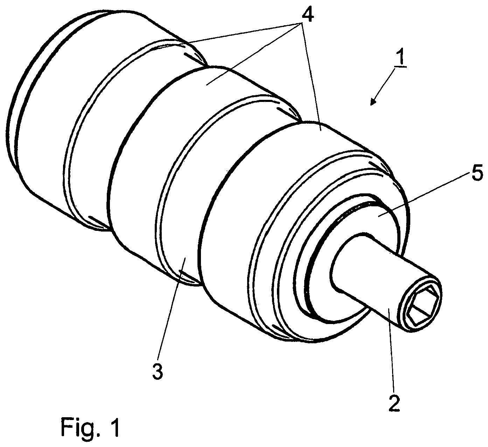

Figur 1 zeigt eine perspektivische Ansicht einer ersten Ausführungsform eines erfindungsgemäßen Schaltpedals 1. Das Schaltpedal 1 umfasst einen Träger, welcher ein sich in dessen Axialrichtung erstreckendes Befestigungselement 2 aufweist, eine nicht dargestellte Hülse und eine Schale 3. An dem Befestigungselement 2 kann ein Gewinde ausgebildet sein. Auf dem Träger ist neben der Hülse ein Dichtelement 5 angeordnet. Auf der Außenfläche der Schale 3 sind drei Kontaktelemente 4 angeordnet, welche sich über den gesamten Umfang der Schale 3 erstrecken und welche aus Gummi bestehen. Die Schale 3 besteht aus Aluminium und der Träger aus Edelstahl. Die Schale 3 weist die Form eines einseitig offenen Hohlzylinders auf, der den Träger, die Hülse und das Dichtelement 5 aufnimmt. Die Kontaktelemente 4 sind fest mit der Außenfläche der Schale 3 verbunden, beispielweise verklebt. Bei der Hülse handelt es sich um einen Hülsenfreilauf, dessen Außenfläche mit der Schale 3 fest verbunden, beispielsweise verklebt ist, sodass die Schale 3 zusammen mit der Hülse in einer ersten Drehrichtung auf dem Träger drehbar und in einer dazu entgegengesetzten Drehrichtung nicht drehbar ist. Gleichwohl kann vorgesehen sein, dass die Hülse auf dem Träger in zwei Drehrichtungen um die Axialrichtung des Trägers verdrehbar ist, in welchem Fall es sich bei der Hülse nicht um einen Hülsenfreilauf oder eine Klemmhülse handelt, sondern die Hülse beispielsweise ein Nadellager, Tonnenlager oder Kugellager, durch welches die Hülse auf dem Träger gelagert ist, oder dass die Hülse eine Lagerbuchse umfasst, durch welche sich der Träger erstreckt.

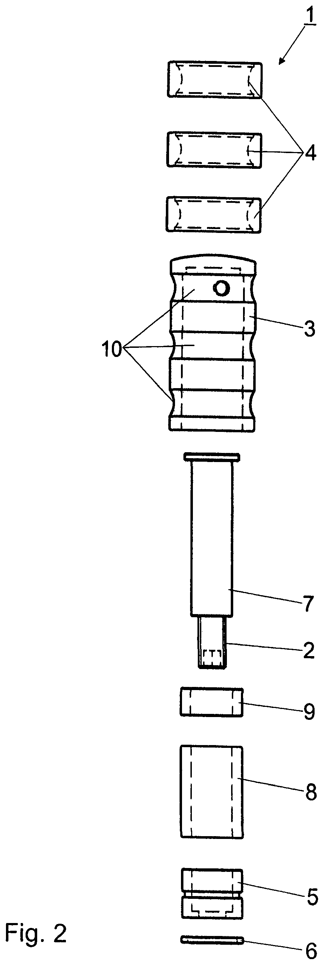

Figur 2 zeigt eine Explosionsdarstellung der ersten Ausführungsform des erfindungsgemäßen Schaltpedals 1. Auf dem Träger 7 ist ein Gleitring 9, eine Hülse 8 in Form eines Hülsenfreilaufes und ein Dichtelement 5 mit einem Dichtring 6 angeordnet. Der Träger 7 wird zusammen mit dem Gleitring 9, der Hülse 8 und dem Dichtelement 5 von der als einseitig offener Hohlzylinder ausgebildeten Schale 3 aufgenommen, wobei sich das Befestigungselement 2 des Trägers 7 über die Schale 3 hinaus erstreckt. An dem Befestigungselement 2 kann ein Gewinde ausgebildet sein. Die Schale 3 ist fest mit der Außenfläche der Hülse 8 verbunden, beispielsweise verklebt oder verschraubt, sodass die Schale 3 gemeinsam mit der Hülse 8 auf dem Träger 7 in einer ersten Drehrichtung verdrehbar ist. Auf der Außenfläche der Schale 3 sind Vertiefungen 10 ausgebildet, in welchen Kontaktelemente 4 angeordnet sind, die mit der Außenfläche der Schale 3 fest verbunden, beispielweise verklebt sind. Die Kontaktelemente 4 umgeben die Schale 3 über deren gesamten Umfang. Der Gleitring 9 besteht aus einem Kunststoff, ebenso wie das Dichtelement 5, wobei der Dichtungsring 6 aus Gummi besteht.

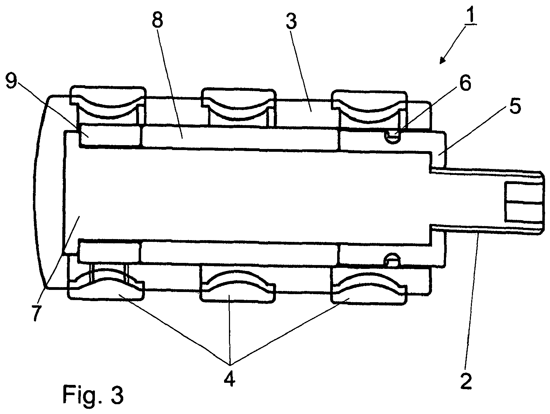

Figur 3 zeigt eine Schnittansicht der ersten Ausführungsform des erfindungsgemäßen Schaltpedals 1. Auf dem Träger 7 sind nebeneinander ein Gleitring 9, eine Hülse 8 und ein Dichtelement 5 angeordnet. Das Dichtelement 5 weist eine in dessen äußerer Radialfläche ausgebildete Vertiefung auf, in welcher der Dichtring 6 angeordnet ist. Das Dichtelement 5 verhindert das Eindringen von Feuchtigkeit zwischen den Träger 7 und die Hülse 8 einerseits und zwischen die Hülse 8 und die Schale 3 andererseits. Der Träger 7 ist zusammen mit dem Gleitring 9, der Hülse 8 und dem Dichtungselement 5 von der Schale 3 aufgenommen, welche die Form eines einseitig offenen Hohlzylinders aufweist. In der Außenfläche der Schale 3 sind Vertiefungen ausgebildet, welche sich über den gesamten Umfang der Schale 3 erstecken. In den Vertiefungen sind die Kontaktelemente 4 angeordnet und an der Schale 3 befestigt, beispielsweise verklebt.

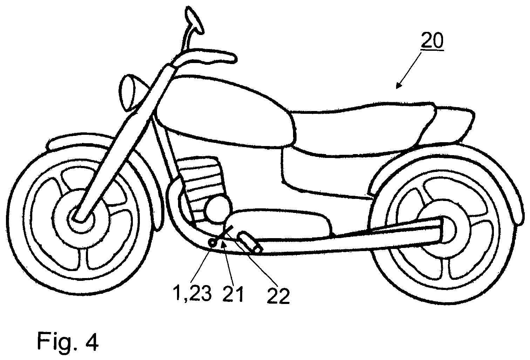

Figur 4 zeigt eine Seitenansicht eines einspurigen Kraftrades 20, welches mit einer Ausführungsform des erfindungsgemäßen Schaltpedals 1 oder einer Ausführungsform des erfindungsgemäßen Schalthebels 21 ausgestattet ist. An dem Hebelarm 23 des Schalthebels 21 kann die zuvor beschriebene erste Ausführungsform des erfindungsgemäßen Schaltpedals 1 angeordnet sein. Stattdessen kann an dem Hebelarm 21 auch ein Schaltpedal 23 drehbar um dessen Axialrichtung befestigt sein, wobei das Schaltpedal 23 in beide Richtungen drehbar oder nur in eine Richtung drehbar an dem Hebelarm 21 befestigt ist. Dazu kann der Hebelarm 21 ein Nadellager, Tonnenlager oder Kugellager aufweisen, in welchem ein Abschnitt des Schaltpedals 23 gelagert ist, und ferner kann der Hebelarm 21 eine Lagerbuchse aufweisen, in welcher ein Abschnitt des Schaltpedals 23 gelagert ist.

### Bezugszeichenliste:

- 1: Schaltpedal
- 2: Befestigungselement
- 3: Schale
- 4: Kontaktelement
- 5: Dichtelement
- 6: Dichtring
- 7: Träger
- 8: Hülse
- 9: Gleitring
- 10: Vertiefung
- 20: einspuriges Kraftrad
- 21: Schalthebel
- 22: Hebelarm
- 23: Schaltpedal

## Patentansprüche

1. Schalthebel (21) für ein einspuriges oder mehrspuriges Kraftfahrzeug, umfassend einen Hebelarm (22) und zumindest ein Schaltpedal (23), welches drehbar um dessen Axialrichtung gelagert ist,
**dadurch gekennzeichnet,**
**dass** das Schaltpedal (23) um dessen Axialrichtung nur in einer ersten Drehrichtung an dem Hebelarm (22) befestigt ist, sodass das Schaltpedal (23) auf der Oberseite eines Schuhs abrollbar ist.

2. Schalthebel (21) nach Anspruch 1,
**dadurch gekennzeichnet,**
**dass** der Hebelarm (22) ein Nadellager, Tonnenlager oder Kugellager aufweist, in welchem ein Abschnitt des Schaltpedals (23) gelagert ist oder dass der Hebelarm (22) eine Lagerbuchse aufweist, in welcher ein Abschnitt des Schaltpedals (23) gelagert ist.

3. Schalthebel (21) nach Anspruch 1,
**dadurch gekennzeichnet,**
**dass** der Schalthebel (21) auf der linken Seite eines ein- oder mehrspurigen Kraftfahrzeuges montierbar ist, wobei das Schaltpedal (23) in derart drehbar an dem Hebelarm (22) befestigt ist, dass das Schaltpedal (23) bei einer aufwärtsgerichteten Neigung eines linken Schuhs eines Kraftfahrzeugführers auf einer Oberseite des Schuhs abrollt.

4. Schalthebel (21) nach Anspruch 1,
**dadurch gekennzeichnet,**
**dass** der Schalthebel (21) auf der rechten Seite eines ein- oder mehrspurigen Kraftfahrzeuges montierbar ist, wobei das Schaltpedal (23) in derart drehbar an dem Hebelarm (22) befestigt ist, dass das Schaltpedal (23) bei einer aufwärts gerichteten Neigung eines rechten Schuhs eines Kraftfahrzeugführers auf einer Oberseite des Schuhs abrollt.

5. Schaltpedal (1) für den Schalthebel eines einspurigen oder mehrspurigen Kraftfahrzeuges, wobei das Schaltpedal (1) einen Träger (7) und eine auf dem Träger (7) gelagerte, zumindest einteilige Hülse (8) aufweist, **dadurch gekennzeichnet,**
**dass** die Hülse (8) auf dem Träger (7) nur in einer ersten Drehrichtung drehbar gelagert ist, sodass das Schaltpedal (23) auf der Oberseite eines Schuhs abrollbar ist.

6. Schaltpedal (1) nach Anspruch 5,
**dadurch gekennzeichnet,**
**dass** die Hülse (8) ein Nadellager, Tonnenlager oder Kugellager aufweist, durch welches die Hülse (8) auf dem Träger (7) gelagert ist, oder dass die Hülse (8) eine Lagerbuchse umfasst, durch welche sich der Träger (7) erstreckt.

7. Schaltpedal (1) nach Anspruch 5 oder 6,
**dadurch gekennzeichnet,**
**dass** der Träger (7) und die Hülse (8) in einer Schale (3) angeordnet sind, wobei die Schale (3) an der Hülse (8) befestigt ist, sodass eine Relativbewegung zwischen der Schale (3) und der Hülse (8) ausgeschlossen ist.

8. Schaltpedal (1) nach Anspruch 7,
**dadurch gekennzeichnet,**
**dass** die Schale (3) die Form eines einseitig oder beidseitig offenen Hohlzylinders aufweist.

9. Schaltpedal (1) nach wenigstens einem der Ansprüche 5 bis 8,
**dadurch gekennzeichnet,**
**dass** auf einer äußeren Radialfläche der Hülse (8) oder der Schale (3) zumindest ein Kontaktelement (4) angeordnet ist.

10. Schaltpedal (1) nach Anspruch 9,
**dadurch gekennzeichnet,**
**dass** sich das Kontaktelement (4) über den gesamten Umfang der Hülse (8) oder der Schale (3) erstreckt.

11. Schaltpedal (1) nach Anspruch 9 oder 10,
**dadurch gekennzeichnet,**
**dass** das Kontaktelement (4) aus Gummi, einem Kunststoff oder einem Metall besteht.

12. Schaltpedal (1) nach Anspruch 5, 7 oder 9,
**dadurch gekennzeichnet,**
**dass** die Hülse (8) ein Hülsenfreilauf oder eine Klemmhülse ist oder einen Hülsenfreilauf oder eine Klemmhülse umfasst.

13. Schaltpedal (1) nach Anspruch 5, 6 oder 7,
**dadurch gekennzeichnet,**
**dass** der Träger (7) ein sich in dessen Axialrichtung erstreckendes Befestigungselement (2) aufweist.

14. Schalthebel für ein einspuriges oder mehrspuriges Kraftfahrzeug, umfassend einen Hebelarm und ein Schaltpedal (1) nach wenigstens einem der Ansprüche 5 bis 13, wobei der Träger (7) an dem Hebelarm befestigt ist, sodass eine Drehung des Trägers (7) um dessen Axialrichtung ausgeschlossen ist.

15. Einspuriges oder mehrspuriges Kraftfahrzeug, welches einen Schalthebel nach wenigstens einem der Ansprüche 1 bis 4 aufweist.

16. Einspuriges oder mehrspuriges Kraftfahrzeug, welches ein Schaltpedal (1) nach wenigstens einem der Ansprüche 5 bis 13 oder einen Schalthebel nach Anspruch 14 aufweist.

## Claims

1. Gearshift lever (21) for a single- or multi-lane motor vehicle, comprising a lever arm (22) and at least one gearshift pedal (23) mounted to be rotatable about its axial direction,
**characterized in**
**that** the gearshift lever (23) is fixed to the lever arm (22) about its axial direction only in a first sense of rotation so that the gearshift pedal (23) can roll off on the upper side of a shoe.

2. Gearshift lever (21) according to claim 1,
**characterized in**
**that** the lever arm (22) comprises a needle bearing, a barrel-shaped bearing, or a ball bearing in which a section of the gearshift pedal (23) is mounted, or that the lever arm (22) comprises a bearing bush in which a section of the gearshift pedal (23) is mounted.

3. Gearshift lever (21) according to claim 1,
**characterized in**
**that** the gearshift lever (21) is mountable on the left side of a single- or multi-lane motor vehicle, the gearshift pedal (23) being fixed to the lever arm (22) in a rotatable manner such that the gearshift pedal (23) rolls off on the upper side of the shoe in case of an upward tilt of a left shoe of a motor vehicle driver.

4. Gearshift lever (21) according to claim 1,
**characterized in**
**that** the gearshift lever (21) is mountable on the right side of a single- or multi-lane motor vehicle, the gearshift pedal (23) being fixed to the lever arm (22) in a rotatable manner such that the gearshift pedal (23) rolls off on the upper side of the shoe in case of an upward tilt of a right shoe of a motor vehicle driver.

5. Gearshift pedal (1) for the gearshift lever of a single- or multi-lane motor vehicle, wherein the gearshift pedal (1) comprises a support (7) and an at least one-piece sleeve (8) mounted on the support (7),
**characterized in**
**that** the sleeve (8) is mounted on the support (7) to be rotatable only in a first sense of rotation, so that the gearshift pedal (23) can roll off on the upper side of a shoe.

6. Gearshift pedal (1) according to claim 5,
**characterized in**
**that** the sleeve (8) comprises a needle bearing, a barrel-shaped bearing, or a ball bearing through which the sleeve (8) is mounted on the support (7), or that the sleeve (8) comprises a bearing bush through which the support (7) extends.

7. Gearshift pedal (1) according to claim 5 or 6,
**characterized in**
**that** the support (7) and the sleeve (8) are arranged in a shell (3), wherein the shell (3) is fixed to the sleeve (8) so that a relative motion between the shell (3) and the sleeve (8) is excluded.

8. Gearshift pedal (1) according to claim 7,
**characterized in**
**that** the shell (3) has the shape of a hollow cylinder open at one side or at both sides.

9. Gearshift pedal (1) according to at least one of claims 5 to 8,
**characterized in**
**that** at least one contact element (4) is arranged on an outer radial surface of the sleeve (8) or the shell (3).

10. Gearshift pedal (1) according to claim 9,
**characterized in**
**that** the contact element (4) extends across the entire circumference of the sleeve (8) or the shell (3).

11. Gearshift pedal (1) according to claim 9 or 10,
**characterized in**
**that** the contact element (4) consists of rubber, a plastic or a metal.

12. Gearshift pedal (1) according to claim 5, 7 or 9,
**characterized in**
**that** the sleeve (8) is a sleeve roller clutch or a clamping sleeve, or comprises a sleeve roller clutch or a clamping sleeve.

13. Gearshift pedal (1) according to claim 5, 6 or 7,
**characterized in**
**that** the support (7) comprises a fixing element (2) extending in its axial direction.

14. Gearshift lever for a single- or multi-lane motor vehicle, comprising a lever arm and a gearshift pedal (1) according to at least one of claims 5 to 13, wherein the support (7) is fixed to the lever arm so that a rotation of the support (7) about its axial direction is excluded.

15. Single- or multi-lane motor vehicle comprising a gearshift lever according to at least one of claims 1 to 4.

16. Single- or multi-lane motor vehicle comprising a gearshift pedal (1) according to at least one of claims 5 to 13 or a gearshift lever according to claim 14.

## Revendications

1. Levier de changement de vitesse (21) pour un véhicule moteur monovoie ou multivoies, comprenant un bras de levier (22) et au moins une pédale de changement de vitesse (23) qui est montée de manière rotative autour de sa direction axiale,
**caractérisé en ce**
**que** la pédale de changement de vitesse (23) est fixée sur le bras de levier (22) seulement dans une premier sens de rotation autour de sa direction axiale, de sorte que la pédale de changement de vitesse (23) peut rouler sur le côté supérieur d'une chaussure.

2. Levier de changement de vitesse (21) selon la revendication 1,
**caractérisé en ce**
**que** le bras de levier (22) présente un roulement à aiguille, un roulement à tonneaux ou un roulement à billes dans lequel une section de la pédale de changement de vitesse (23) est montée ou **en ce que** le bras de levier (22) présente un coussinet dans lequel une section de la pédale de changement de vitesses (23) est montée.

3. Levier de changement de vitesse (21) selon la revendication 1,
**caractérisé en ce**
**que** le levier de changement de vitesse (21) peut être monté sur le côté gauche d'un véhicule moteur monovoie ou multivoies, la pédale de changement de vitesse (23) étant fixée sur le bras de levier (22) de telle manière rotative que la pédale de changement de vitesse (23), lors d'une inclinaison orientée vers le haut d'une chaussure gauche d'un conducteur de véhicule moteur, roule sur un côté supérieur de la chaussure.

4. Levier de changement de vitesse (21) selon la revendication 1,
**caractérisé en ce**
**que** le levier de changement de vitesse (21) peut être monté sur le côté droit d'un véhicule moteur monovoie ou multivoies, la pédale de changement de vitesse (23) étant fixée sur le bras de levier (22) de telle manière rotative que la pédale de changement de vitesse (23), lors d'une inclinaison orientée vers le haut d'une chaussure droite d'un conducteur de véhicule moteur, roule sur un côté supérieur de la chaussure.

5. Pédale de changement de vitesse (1) pour le levier de changement de vitesse d'un véhicule moteur monovoie ou multivoies, la pédale de changement de vitesse (1) présentant un support (7) et une douille (8) au moins d'une seule pièce, montée sur le support (7),
**caractérisé en ce**
**que** la douille (8) est logée de manière rotative seulement dans un premier sens de rotation, de sorte que la pédale de changement de vitesse (23) peut rouler sur le côté supérieur d'une chaussure.

6. Pédale de changement de vitesse (1) selon la revendication 5,
**caractérisé en ce**
**que** la douille (8) présente un roulement à aiguille, un roulement à tonneaux ou un roulement à billes, au moyen duquel la douille (8) est montée sur le support (7), ou **en ce que** la douille (8) comprend un coussinet à travers lequel s'étend le support (7).

7. Pédale de changement de vitesse (1) selon la revendication 5 ou 6,
**caractérisé en ce**
**que** le support (7) et la douille (8) sont disposés dans une coque (3), la coque (3) étant fixée sur la douille (8) de sorte qu'un mouvement relatif entre la coque (3) et la douille (8) est exclu.

8. Pédale de changement de vitesse (1) selon la revendication 7,
**caractérisé en ce**
**que** la coque (3) présente la forme d'un cylindre creux ouvert sur un côté ou de chaque côté.

9. Pédale de changement de vitesse (1) selon au moins une des revendications 5 à 8,
**caractérisé en ce**
**qu'**au moins un élément de contact (4) est disposé sur une surface radiale extérieure de la douille (8) ou de la coque (3).

10. Pédale de changement de vitesse (1) selon la revendication 9,
**caractérisé en ce**
**que** l'élément de contact (4) s'étend sur toute la circonférence de la douille (8) ou de la coque (3).

11. Pédale de changement de vitesse (1) selon la revendication 9 ou 10,
**caractérisé en ce**
**que** l'élément de contact (4) est constitué de caoutchouc, d'une matière plastique ou d'un métal.

12. Pédale de changement de vitesse (1) selon les revendications 5, 7 ou 9,
**caractérisé en ce**
**que** la douille (8) est une roue-libre ou une douille de serrage ou comprend une roue-libre ou une douille de serrage.

13. Pédale de changement de vitesse (1) selon la revendication 5, 6 ou 7,
**caractérisé en ce**
**que** le support (7) présente un élément de fixation (2) s'étendant dans sa direction axiale.

14. Levier de changement de vitesse pour un véhicule moteur monovoie ou multivoies, comprenant un bras de levier et une pédale de changement de vitesse (1) selon au moins une des revendications 5 à 13, le support (7) étant fixé sur le bras de levier de sorte qu'une rotation du support (7) autour de sa direction axiale est exclue.

15. Véhicule moteur monovoie ou multivoies, lequel présente un levier de changement de vitesse selon au moins une des revendications 1 à 4.

16. Véhicule moteur monovoie ou multivoies, lequel présente une pédale de changement de vitesse (1) selon au moins une des revendications 5 à 13 ou un levier de changement de vitesse selon la revendication 14.
